# EUROPÄISCHE PATENTSCHRIFT

(11) **EP 2 040 905 B1**
(45) Veröffentlichungstag und Bekanntmachung des Hinweises auf die Patenterteilung: **25.05.2011**
(21) Anmeldenummer: 07785618.5
(22) Anmeldetag: 05.07.2007
(51) Int. Cl.: B29C 49/12, B29C 49/66

(54) **VERFAHREN UND VORRICHTUNG ZUR BLASFORMUNG VON BEHÄLTERN**
METHOD AND DEVICE FOR BLOW-MOULDING CONTAINERS
PROCÉDÉ ET DISPOSITIF DE MOULAGE DE RÉCIPIENTS PAR SOUFFLAGE

(30) Priorität: 12.07.2006 DE 102006032140
(43) Veröffentlichungstag der Anmeldung: 01.04.2009
(73) Patentinhaber: KHS Corpoplast GmbH, 22145 Hamburg (DE)
(72) Erfinder: HAESENDONCKX, Frank, 22395 Hamburg (DE); RASCH, Jens-Peter, 22926 Ahrensburg (DE); GERNHUBER, Matthias, 22527 Hamburg (DE)
(74) Vertreter: Klickow, Hans-Henning
(86) Internationale Anmeldenummer: PCT/DE2007/001220
(87) Internationale Veröffentlichungsnummer: WO 2008/006347

(56) Entgegenhaltungen:
- EP-A- 0 559 103
- EP-A- 1 688 234
- DE-A1- 10 027 924
- DE-A1-102004 003 939
- FR-A- 2 405 809
- JP-A- 1 127 313
- JP-A- 2 289 328
- JP-A- 5 237 923
- JP-A- 56 013 141
- US-A- 4 473 515
- US-A- 5 182 122
- US-A1- 2004 155 386

## Beschreibung

Die Erfindung betrifft ein Verfahren zur Blasformung von Behältern, bei dem ein Vorformling nach einer thermischen Konditionierung innerhalb einer mit einer Blasform versehenen Blasstation von einer Reckstange gereckt und durch Blasdruckeinwirkung in den Behälter umgeformt wird und bei dem unter Druck stehendes Gas in den Behälter eingeleitet wird.

Die Erfindung betrifft darüber hinaus eine Vorrichtung zur Blasformung von Behältern, die mindestens eine Blasstation mit einer Blasform sowie mindestens einer Reckstange aufweist, sowie bei der die Blasstation an eine Versorgungseinrichtung zur Zufuhr von unter Druck stehendem Gas angeschlossen ist und bei der die Reckstange mindestens bereichsweise hohl ausgebildet.

Bei einer Behälterformung durch Blasdruckeinwirkung werden Vorformlinge aus einem thermoplastischen Material, beispielsweise Vorformlinge aus PET (Polyethylenterephthalat), innerhalb einer Blasmaschine unterschiedlichen Bearbeitungsstationen zugeführt. Typischerweise weist eine derartige Blasmaschine eine Heizeinrichtung sowie eine Blaseinrichtung auf, in deren Bereich der zuvor temperierte Vorformling durch biaxiale Orientierung zu einem Behälter expandiert wird. Die Expansion erfolgt mit Hilfe von Druckluft, die in den zu expandierenden Vorformling eingeleitet wird. Der verfahrenstechnische Ablauf bei einer derartigen Expansion des Vorformlings wird in der DE-OS 43 40 291 erläutert. Die einleitend erwähnte Einleitung des unter Druck stehenden Gases umfaßt auch die Druckgaseinleitung in die sich entwickelnde Behälterblase sowie die Druckgaseinleitung in den Vorformling zu Beginn des Blasvorganges.

Der grundsätzliche Aufbau einer Blasstation zur Behälterformung wird in der DE-OS 42 12 583 beschrieben. Möglichkeiten zur Temperierung der Vorformlinge werden in der DE-OS 23 52 926 erläutert.

Innerhalb der Vorrichtung zur Blasformung können die Vorformlinge sowie die geblasenen Behälter mit Hilfe unterschiedlicher Handhabungseinrichtungen transportiert werden. Bewährt hat sich insbesondere die Verwendung von Transportdornen, auf die die Vorformlinge aufgesteckt werden. Die Vorformlinge können aber auch mit anderen Trageinrichtungen gehandhabt werden. Die Verwendung von Greifzangen zur Handhabung von Vorformlingen und die Verwendung von Spreizdornen, die zur Halterung in einen Mündungsbereich des Vorformlings einführbar sind, gehören ebenfalls zu den verfügbaren Konstruktionen.

Eine Handhabung von Behältern unter Verwendung von Übergaberädern wird beispielsweise in der DE-OS 199 06 438 bei einer Anordnung des Übergaberades zwischen einem Blasrad und einer Ausgabestrecke beschrieben.

Die bereits erläuterte Handhabung der Vorformlinge erfolgt zum einen bei den sogenannten Zweistufenverfahren, bei denen die Vorformlinge zunächst in einem Spritzgußverfahren hergestellt, anschließend zwischengelagert und erst später hinsichtlich ihrer Temperatur konditioniert und zu einem Behälter aufgeblasen werden. Zum anderen erfolgt eine Anwendung bei den sogenannten Einstufenverfahren, bei denen die Vorformlinge unmittelbar nach ihrer spritzgußtechnischen Herstellung und einer ausreichenden Verfestigung geeignet temperiert und anschließend aufgeblasen werden.

Im Hinblick auf die verwendeten Blasstationen sind unterschiedliche Ausführungsformen bekannt. Bei Blasstationen, die auf rotierenden Transporträdern angeordnet sind, ist eine buchartige Aufklappbarkeit der Formträger häufig anzutreffen. Es ist aber auch möglich, relativ zueinander verschiebliche oder andersartig geführte Formträger einzusetzen. Bei ortsfesten Blasstationen, die insbesondere dafür geeignet sind, mehrere Kavitäten zur Behälterformung aufzunehmen, werden typischerweise parallel zueinander angeordnete Platten als Formträger verwendet.

Eine detaillierte Beschreibung eines Recksystems einer Blasstation mit zugeordneter Reckstange erfolgt in der DE-OS 101 45 579. Die Reckstange ist hier als ein massiver Stab ausgebildet und die Blasluft wird der Blasform durch einen Anschlußkolben hindurch zugeführt, der einen größeren Innendurchmesser aufweist, als der Außendurchmesser der Reckstange beträgt. Hierdurch wird zwischen der Reckstange und einer Innenfläche des Anschlußkolbens ein Ringspalt bereitgestellt, durch den das unter Druck stehende Gas hindurchströmen kann.

Die Verwendung einer hohlen Reckstange ist beispielsweise aus der DE-OS 28 14 952 bekannt. Ein Anschluß für das unter Druck stehende Gas erfolgt hier über ein einer Reckstangenkuppe abgewandtes Ende der rohrartig ausgebildeten Reckstange. Eine Druckgaszuführung über das Ende einer hohlen Reckstange wird darüber hinaus in der DE 34 08 740 C2 beschrieben.

Die bekannten Druckgaszuführungen können bislang noch nicht alle Anforderungen gemeinsam erfüllen, die bei ständig zunehmenden Produktionsraten gestellt werden. Die Druckgaszuführungen erfolgen gemäß dem Stand der Technik bislang überwiegend derart, daß entweder das gesamte für die Expansion des Vorformlings benötigte Druckgas durch einen die Reckstange umgebenden Ringspalt oder bei der Verwendung von hohlen Reckstangen durch die Reckstange hindurch und aus einer Vielzahl entlang der Reckstange verteilter Austrittsöffnungen heraus erfolgt. Eine Nutzung sowohl des Ringspaltes als auch einer hohlen Reckstange wird in der WO 2005/023517 sowie der WO 2005/023520 beschrieben.

Aus der DE 10 2004 003 939 A1 ist es bereits bekannt, über den Innenraum einer hohlen Reckstange Blasgas in den Innenraum eines zu blasenden Behälters einzuleiten. Insbesondere ist daran gedacht, einen Teil des Blasgases durch einen die Reckstange umgebenden Ringspalt und einen zweiten Teil durch den Innenraum der Reckstange hindurch in den Behälterinnenraum einzuleiten. Durch eine geeignete Strömungsführung kann eine Kühlwirkung bereits während der Durchführung des Blasformungsvorganges erreicht werden.

Aus der US-A-5,182,122 ist es bekannt, nach einem Abschluß des Blasformungsvorganges und nach einem Ablassen des Blasdruckes durch den Innenraum der Reckstange hindurch ein Kühlgas, insbesondere flüssigen Stickstoff, in den geblasenen Behälter hinein einzuleiten und hierdurch eine Kühlung des Behältermaterials, insbesondere im Bereich der Seitenwandungen, zu erreichen.

Aufgabe der vorliegenden Erfindung ist es, ein Verfahren der einleitend genannten Art derart anzugeben, daß eine verringerte Prozeßzeit bei der Behälterformung erreicht wird.

Diese Aufgabe wird erfindungsgemäß dadurch gelöst, daß nach dem Erreichen eines maximalen Blasdruckes in der Blasstation und zu einem Beginn einer Druckabsenkung bzw. mit einer vorgebbaren Verzögerungszeit nach dem Beginn der Druckabsenkung aus der Reckstange heraus ein kühlendes Gas in Richtung auf einen Boden des geblasenen Behälters geleitet wird.

Weitere Aufgabe der vorliegenden Erfindung ist es, eine Vorrichtung der einleitend genannten Art derart zu konstruieren, daß eine gesteigerte Produktivität je verwendeter Blasstation erreicht werden kann.

Diese Aufgabe wird erfindungsgemäß dadurch gelöst, daß ein von der Reckstange bereitgestellter Stangeninnenraum als Zwischenspeicher ausgebildet ist, der aus dem Innenraum der Blasform heraus und in den Stangeninnenraum hinein strömendes Blasgas aufnimmt und nach einer Blasdruckabsenkung aus dem Stangeninnenraum heraus in den Innenraum der Blasform überleitet.

Vorteilhafte Weiterbildungen der Erfindung sind Gegenstand der jeweiligen abhängigen Ansprüche.

Durch den Beginn einer aktiven Kühlung des Bodens des geblasenen Behälters frühestens zu einem Beginn einer Druckabsenkung wird erreicht, daß eine Kühlung des Bodens erst nach einer vollständigen Konturausformung erfolgt. Der Blasdruck wird so lange auf einer vollen Höhe aufrecht erhalten, bis die Verfestigung des Bodenbereiches des geblasenen Behälters soweit fortgeschritten ist, daß ein Rückschrumpfen bei einer Druckabsenkung nicht mehr in einem nennenswerten Umfang erfolgt. Aufgrund der aktiven Kühlung des Bodens durch das aus der Reckstange herausströmende Gas ist es möglich, den Behälter relativ schnell aus der Blasform zu entnehmen, da eine weitere Abstützung des Behälters durch die Blasform nicht mehr erforderlich ist. Gemäß einer optimalen Verfahrensgestaltung erfolgt somit die Druckabsenkung innerhalb des geblasenen Behälters zu einem frühestmöglichen Zeitpunkt und die weitere Verfestigung des Behältermaterials wird durch das Anblasen mit der Kühlluft unterstützt.

Durch die Nutzung des Hohlraumes der Reckstange als Zwischenspeicher für die Kühlluft kann auf eine externe Zufuhr zusätzlicher Kühlluft verzichtet werden, bzw. es kann zumindest eine Minimierung einer entsprechenden Kühlgasversorgung erfolgen. Da sich der Blasdruck im gesamten Innenraum der Blasform bzw. im Innenraum des geblasenen Behälters ausbreitet, erfolgt auch im Innenraum der Reckstange durch Verbindungsöffnungen hindurch ein entsprechender Druckanstieg. Bei einer Absenkung des Blasdruckes strömt dieses Blasgas aus der Reckstange in den Innenraum des Behälters und kann durch eine geeignete Ausrichtung der Ausströmöffnungen in Richtung auf die zu kühlenden Bereiche des Behälters, insbesondere in Richtung auf den Boden geleitet werden.

Die Abkühlung des Behältermaterials ist in denjenigen Bereichen erwünscht, in denen der Vorformling zumindest bereits näherungsweise die endgültige Gestaltung des Behälters angenommen hat. Unerwünscht ist eine Abkühlung des Behältermaterials jedoch in denjenigen Bereichen, in denen noch eine stärkere Verformung des Materials erforderlich ist.

Gemäß einer Erfindungsvariante ist daran gedacht, daß die Blasluft zunächst in den Innenraum der Blasform eingeleitet wird und dann aus dem Innenraum der Blasform in den Hohlraum der Reckstange strömt sowie im Anschluß an die Blasdruckabsenkung in den Innenraum der Blasform zurückströmt. Ebenfalls ist es bei einer Einleitung von Blasluft über die Reckstange hindurch in die Blasform aber auch möglich, daß zeitlich synchron mit der Befüllung des Innenraumes der Blasform bzw. des Innenraumes des zum Behälter zu expandierenden Vorformlings auch der Zwischenspeicher der Reckstange befüllt wird und daß im Anschluß an eine Blasdruckabsenkung das in diesen Zwischenraum gespeicherte Blasgas in den Innenraum der Blasform nachströmt und hier die erwünschte Kühlwirkung verursacht.

Eine vergrößerte Kühlwirkung wird dadurch unterstützt, daß das kühlende Gas der Reckstange von einer Druckgasversorgung zugeführt wird.

Zur Vermeidung zusätzlicher Kühlgasversorgungen wird vorgeschlagen, daß das kühlende Gas der Reckstange von einer Blasgas-Hochdruckversorgung zugeführt wird.

Eine kompakte Konstruktion wird dadurch unterstützt, daß das kühlende Gas aus einem Speicherraum der Reckstange herausströmt.

Ein äußerst einfacher konstruktiver Aufbau läßt sich dadurch erreichen, daß der Speicherraum der Reckstange durch Blasgas aus einem Innenraum der Blasform heraus gefüllt wird.

Zur Vergrößerung des verfügbaren Volumens an Kühlgas wird vorgeschlagen, daß ein Innenraum der Reckstange mit einem Zusatzspeicher für kühlendes Gas gekoppelt ist.

Zu einer einfachen konstruktiven Realisierung trägt es ebenfalls bei, daß der Zusatzspeicher und der Innenraum der Reckstange im wesentlichen in einer Längsrichtung hintereinander positioniert werden.

Ein großes Kühlgasvolumen bei gleichzeitig kompakter Konstruktion läßt sich dadurch bereitstellen, daß der Zusatzspeicher mindestens bereichsweise den Innenraum der Reckstange umgebend positioniert wird.

Eine weitere Verkürzung der Prozeßzeit wird dadurch erreicht, daß der Behälter in einer Blasform mit einer Blasformtemperatur von höchstens 60°C, alternativ von höchstens 75°C, geformt wird.

Insbesondere ist daran gedacht, daß der Behälter in einer Blasform mit einer Blasformtemperatur von höchstens 40°C geformt wird.

Eine preiswerte und zugleich äußerst effektive Realisierung erfolgt dadurch, daß mindestens ein Teil des aus der Reckstange herausströmenden Kühlgases in einem vorhergehenden Prozeßschritt als Blasgas in die Blasform eingeleitet wurde.

In den Zeichnungen sind Ausführungsbeispiele der Erfindung schematisch dargestellt. Es zeigen:
- Fig. 1: Eine perspektivische Darstellung einer Blas- station zur Herstellung von Behältern aus Vor- formlingen,
- Fig. 2: einen Längsschnitt durch eine Blasform, in der ein Vorformlinge gereckt und expandiert wird,
- Fig. 3: eine Skizze zur Veranschaulichung eines grund- sätzlichen Aufbaus einer Vorrichtung zur Blas- formung von Behältern,
- Fig. 4: eine modifizierte Heizstrecke mit vergrößerter Heizkapazität,
- Fig. 5: eine Seitenansicht einer Blasstation, bei der eine Reckstange von einem Reckstangenträger positioniert wird,
- Fig. 6: eine vergrößerte und teilweise geschnittene Darstellung eines oberen Bereiches der Reck- stangenführung der Reckstange,
- Fig. 7: eine vergrößerte Darstellung der Einzelheit VII in Fig. 6 und
- Fig. 8: eine gegenüber Fig. 2 stärker detaillierte Darstellung eines Längsschnittes durch die Blasstation zur Veranschaulichung der Gestal- tung der Reckstange.

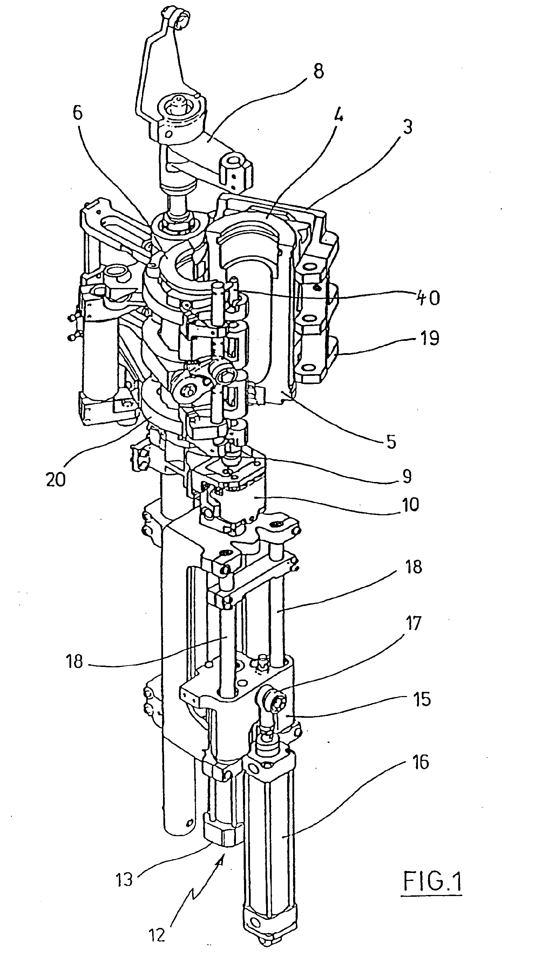

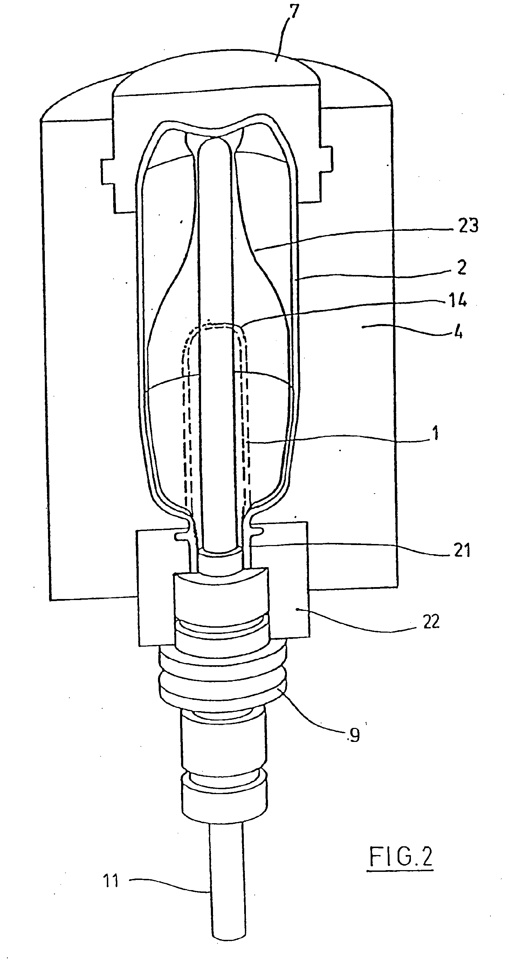

Der prinzipielle Aufbau einer Vorrichtung zur Umformung von Vorformlingen (1) in Behälter (2) ist in Fig. 1 und in Fig. 2 dargestellt.

Die Vorrichtung zur Formung des Behälters (2) besteht im wesentlichen aus einer Blasstation (3), die mit einer Blasform (4) versehen ist, in die ein Vorformling (1) einsetzbar ist. Der Vorformling (1) kann ein spritzgegossenes Teil aus Polyethylenterephthalat sein. Zur Ermöglichung eines Einsetzens des Vorformlings (1) in die Blasform (4) und zur Ermöglichung eines Herausnehmens des fertigen Behälters (2) besteht die Blasform (4) aus Formhälften (5, 6) und einem Bodenteil (7), das von einer Hubvorrichtung (8) positionierbar ist. Der Vorformling (1) kann im Bereich der Blasstation (3) von einem Transportdorn (9) gehalten sein, der gemeinsam mit dem Vorformling (1) eine Mehrzahl von Behandlungsstationen innerhalb der Vorrichtung durchläuft. Es ist aber auch möglich, den Vorformling (1) beispielsweise über Zangen oder andere Handhabungsmittel direkt in die Blasform (4) einzusetzen.

Zur Ermöglichung einer Druckluftzuleitung ist unterhalb des Transportdornes (9) ein Anschlußkolben (10) angeordnet, der dem Vorformling (1) Druckluft zuführt und gleichzeitig eine Abdichtung relativ zum Transportdorn (9) vornimmt. Bei einer abgewandelten Konstruktion ist es grundsätzlich aber auch denkbar, feste Druckluftzuleitungen zu verwenden.

Eine Reckung des Vorformlings (1) erfolgt bei diesem Ausführungsbeispiel mit Hilfe einer Reckstange (11), die von einem Zylinder (12) positioniert wird. Gemäß einer anderen Ausführungsform wird eine mechanische Positionierung der Reckstange (11) über Kurvensegmente durchgeführt, die von Abgriffrollen beaufschlagt sind. Die Verwendung von Kurvensegmenten ist insbesondere dann zweckmäßig, wenn eine Mehrzahl von Blasstationen (3) auf einem rotierenden Blasrad angeordnet sind.

Bei der in Fig. 1 dargestellten Ausführungsform ist das Recksystem derart ausgebildet, daß eine Tandem-Anordnung von zwei Zylindern (12) bereitgestellt ist. Von einem Primärzylinder (13) wird die Reckstange (11) zunächst vor Beginn des eigentlichen Reckvorganges bis in den Bereich eines Bodens (14) des Vorformlings (1) gefahren. Während des eigentlichen Reckvorganges wird der Primärzylinder (13) mit ausgefahrener Reckstange gemeinsam mit einem den Primärzylinder (13) tragenden Schlitten (15) von einem Sekundärzylinder (16) oder über eine Kurvensteuerung positioniert. Insbesondere ist daran gedacht, den Sekundärzylinder (16) derart kurvengesteuert einzusetzen, daß von einer Führungsrolle (17), die während der Durchführung des Reckvorganges an einer Kurvenbahn entlang gleitet, eine aktuelle Reckposition vorgegeben wird. Die Führungsrolle (17) wird vom Sekundärzylinder (16) gegen die Führungsbahn gedrückt. Der Schlitten (15) gleitet entlang von zwei Führungselementen (18).

Nach einem Schließen der im Bereich von Trägern (19, 20) angeordneten Formhälften (5, 6) erfolgt eine Verriegelung der Träger (19, 20) relativ zueinander mit Hilfe einer Verriegelungseinrichtung (20).

Zur Anpassung an unterschiedliche Formen eines Mündungsabschnittes (21) des Vorformlings (1) ist gemäß Fig. 2 die Verwendung separater Gewindeeinsätze (22) im Bereich der Blasform (4) vorgesehen.

Fig. 2 zeigt zusätzlich zum geblasenen Behälter (2) auch gestrichelt eingezeichnet den Vorformling (1) und schematisch eine sich entwickelnde Behälterblase (23).

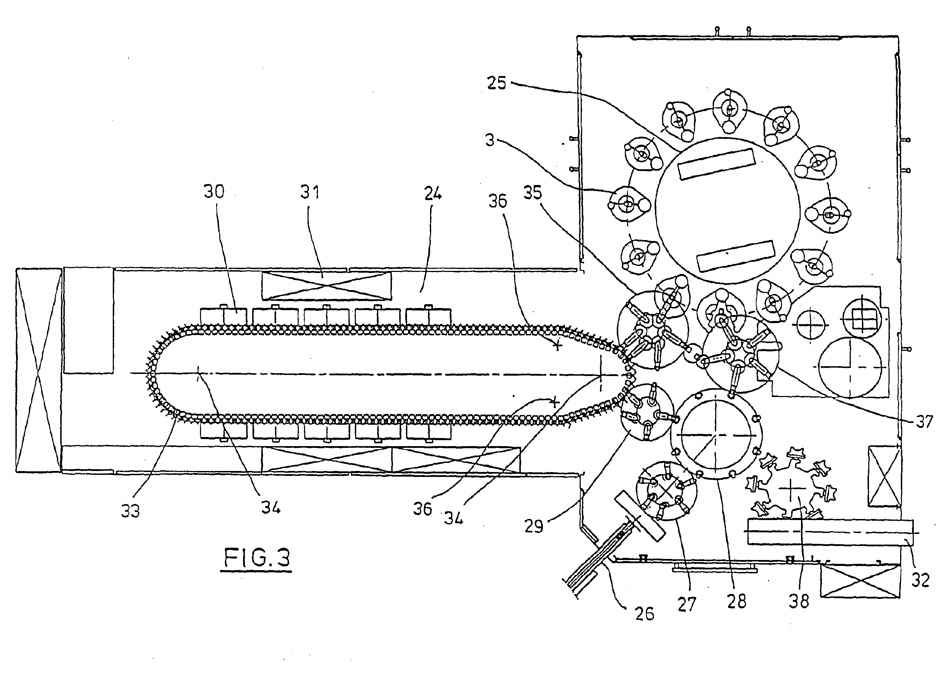

Fig. 3 zeigt den grundsätzlichen Aufbau einer Blasmaschine, die mit einer Heizstrecke (24) sowie einem rotierenden Blasrad (25) versehen ist. Ausgehend von einer Vorformlingseingabe (26) werden die Vorformlinge (1) von Übergaberädern (27, 28, 29) in den Bereich der Heizstrecke (24) transportiert. Entlang der Heizstrecke (24) sind Heizstrahler (30) sowie Gebläse (31) angeordnet, um die Vorformlinge (1) zu temperieren. Nach einer ausreichenden Temperierung der Vorformlinge (1) werden diese an das Blasrad (25) übergeben, in dessen Bereich die Blasstationen (3) angeordnet sind. Die fertig geblasenen Behälter (2) werden von weiteren Übergaberädern einer Ausgabestrecke (32) zugeführt.

Um einen Vorformling (1) derart in einen Behälter (2) umformen zu können, daß der Behälter (2) Materialeigenschaften aufweist, die eine lange Verwendungsfähigkeit von innerhalb des Behälters (2) abgefüllten Lebensmitteln, insbesondere von Getränken, gewährleisten, müssen spezielle Verfahrensschritte bei der Beheizung und Orientierung der Vorformlinge (1) eingehalten werden. Darüber hinaus können vorteilhafte Wirkungen durch Einhaltung spezieller Dimen-sionierungsvorschriften erzielt werden.

Als thermoplastisches Material können unterschiedliche Kunststoffe verwendet werden. Einsatzfähig sind beispielsweise PET, PEN oder PP.

Die Expansion des Vorformlings (1) während des Orientierungsvorganges erfolgt durch Druckluftzuführung. Die Druckluftzuführung ist in eine Vorblasphase, in der Gas, zum Beispiel Preßluft, mit einem niedrigen Druckniveau zugeführt wird und in eine sich anschließende Hauptblasphase unterteilt, in der Gas mit einem höheren Druckniveau zugeführt wird. Während der Vorblasphase wird typischerweise Druckluft mit einem Druck im Intervall von 10 bar bis 25 bar verwendet und während der Hauptblasphase wird Druckluft mit einem Druck im Intervall von 25 bar bis 40 bar zugeführt.

Aus Fig. 3 ist ebenfalls erkennbar, daß bei der dargestellten Ausführungsform die Heizstrecke (24) aus einer Vielzahl umlaufender Transportelemente (33) ausgebildet ist, die kettenartig aneinandergereiht und entlang von Umlenkrädern (34) geführt sind. Insbesondere ist daran gedacht, durch die kettenartige Anordnung eine im wesentlichen rechteckförmige Grundkontur aufzuspannen. Bei der dargestellten Ausführungsform werden im Bereich der dem Übergaberad (29) und einem Eingaberad (35) zugewandten Ausdehnung der Heizstrecke (24) ein einzelnes relativ groß dimensioniertes Umlenkrad (34) und im Bereich von benachbarten Umlenkungen zwei vergleichsweise kleiner dimensionierte Umlenkräder (36) verwendet. Grundsätzlich sind aber auch beliebige andere Führungen denkbar.

Zur Ermöglichung einer möglichst dichten Anordnung des Übergaberades (29) und des Eingaberades (35) relativ zueinander erweist sich die dargestellte Anordnung als besonders zweckmäßig, da im Bereich der entsprechenden Ausdehnung der Heizstrecke (24) drei Umlenkräder (34, 36) positioniert sind, und zwar jeweils die kleineren Umlenkräder (36) im Bereich der Überleitung zu den linearen Verläufen der Heizstrecke (24) und das größere Umlenkrad (34) im unmittelbaren Übergabebereich zum Übergaberad (29) und zum Eingaberad (35). Alternativ zur Verwendung von kettenartigen Transportelementen (33) ist es beispielsweise auch möglich, ein rotierendes Heizrad zu verwenden.

Nach einem fertigen Blasen der Behälter (2) werden diese von einem Entnahmerad (37) aus dem Bereich der Blasstationen (3) herausgeführt und über das Übergaberad (28) und ein Ausgaberad (38) zur Ausgabestrecke (32) transportiert.

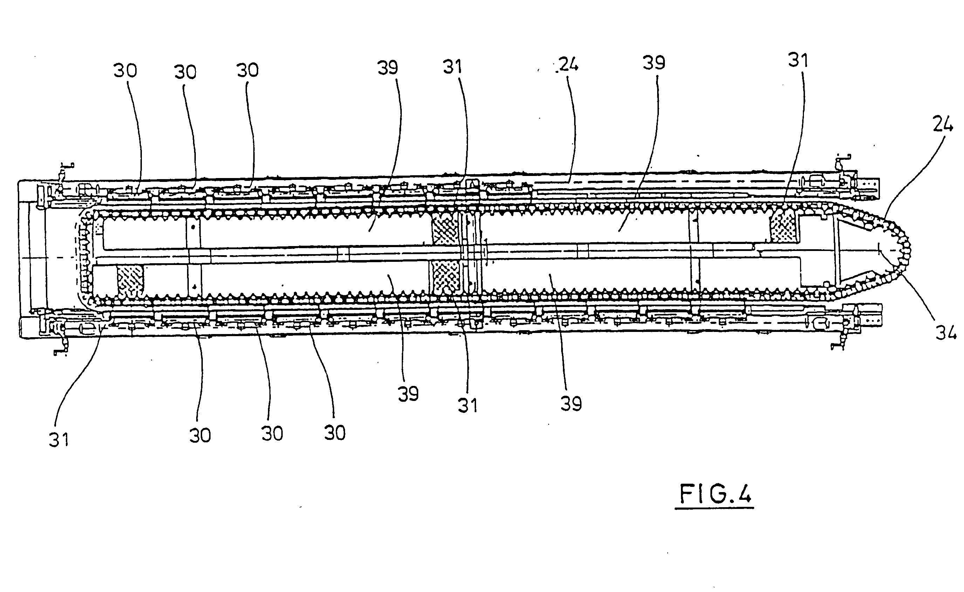

In der in Fig. 4 dargestellten modifizierten Heizstrekke (24) können durch die größere Anzahl von Heizstrahlern (30) eine größere Menge von Vorformlingen (1) je Zeiteinheit temperiert werden. Die Gebläse (31) leiten hier Kühlluft in den Bereich von Kühlluftkanälen (39) ein, die den zugeordneten Heizstrahlern (30) jeweils gegenüberliegen und über Ausströmöffnungen die Kühlluft abgeben. Durch die Anordnung der Ausströmrichtungen wird eine Strömungsrichtung für die Kühlluft im wesentlichen quer zu einer Transportrichtung der Vorformlinge (1) realisiert. Die Kühlluftkanäle (39) können im Bereich von den Heizstrahlern (30) gegenüberliegenden Oberflächen Reflektoren für die Heizstrahlung bereitstellen, ebenfalls ist es möglich, über die abgegebene Kühlluft auch eine Kühlung der Heizstrahler (30) zu realisieren.

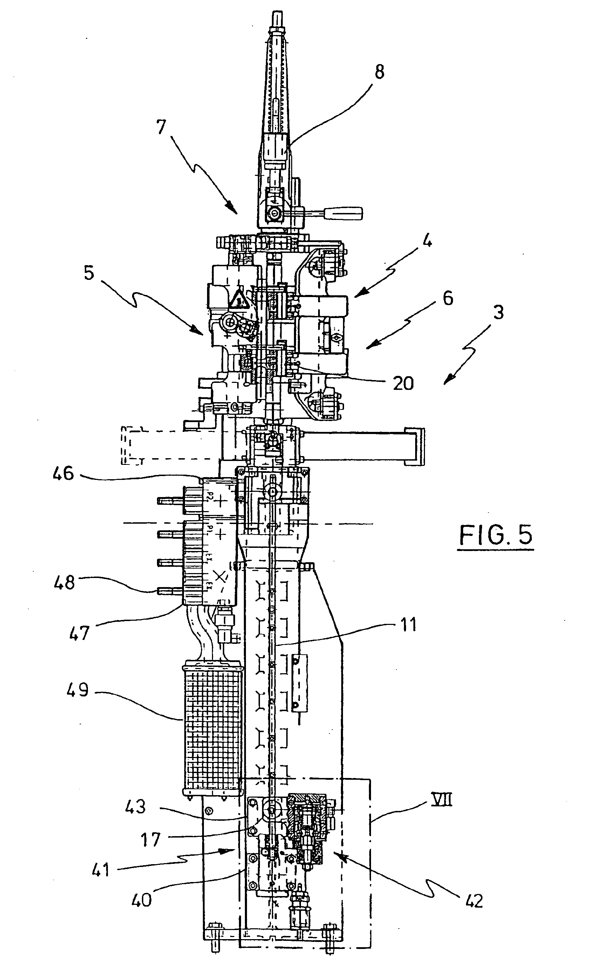

Fig. 5 zeigt eine gegenüber der Darstellung in Fig. 1 abgewandelte Darstellung der Blasstation (3) bei einer Blickrichtung von vorne. Insbesondere ist aus dieser Darstellung erkennbar, daß die Reckstange (11) von einem Reckstangen-träger (41) gehaltert ist, der aus einem Trägersockel (40) und einem über ein Kupplungselement (42) mit dem Trägersockel (40) verbundenen Rollenträger (43) ausgebildet ist. Der Rollenträger (43) haltert die Führungsrolle (17), die zur Positionierung des Recksystems dient. Die Führungsrolle (17) wird entlang einer nicht dargestellten Kurvenbahn geführt. Es ist hier eine vollständige mechanische Steuerung des Reckvorganges realisiert.

Das in Fig. 5 veranschaulichte Kupplungselement (42) kann auch bei der Ausführungsform gemäß Fig. 1 zur Ermöglichung einer vollständigen mechanischen Entkopplung der Zylinder (12) voneinander bzw. von einem Tragelement für die Führungsrolle (17) eingesetzt werden.

Fig. 5 veranschaulicht einen eingerasteten Zustand des Kupplungselementes (42), in dem der Trägersockel (40) und der Rollenträger (43) miteinander durch das Kupplungselement (42) verbunden sind. Es liegt hierdurch eine starre mechanische Kopplung vor, die dazu führt, daß eine Positionierung der Führungsrolle (17) direkt und unmittelbar in eine Positionierung der Reckstange (11) umgesetzt wird. Es liegt hierdurch in jedem Bewegungszustand des Blasrades (25) eine exakt vorgegebene Positionierung der Reckstange (11) vor und die Positionierung der Reckstange (11) wird bei einer Mehrzahl von auf dem Blasrad (25) angeordneten Blasstationen (3) bei jeder Blasstation (3) exakt reproduziert. Diese exakte mechanische Vorgabe der Positionierung der Reckstange (11) trägt zu einer hohen Produktqualität sowie zu einer hohen Gleichmäßigkeit der hergestellten Behälter (2) bei.

Fig. 5 zeigt ebenfalls die Anordnung eines Pneumatikblockes (46) zur Blasdruckversorgung der Blasstation (3). Der Pneumatikblock (46) ist mit Hochdruckventilen (47) ausgestattet, die über Anschlüsse (48) an eine oder mehrere Druckversorgungen angeschlossen werden können. Nach einer Blasformung der Behälter (2) wird in eine Umgebung abzuleitende Blasluft wird über den Pneumatikblock (46) zunächst einem Schalldämpfer (49) zugeführt.

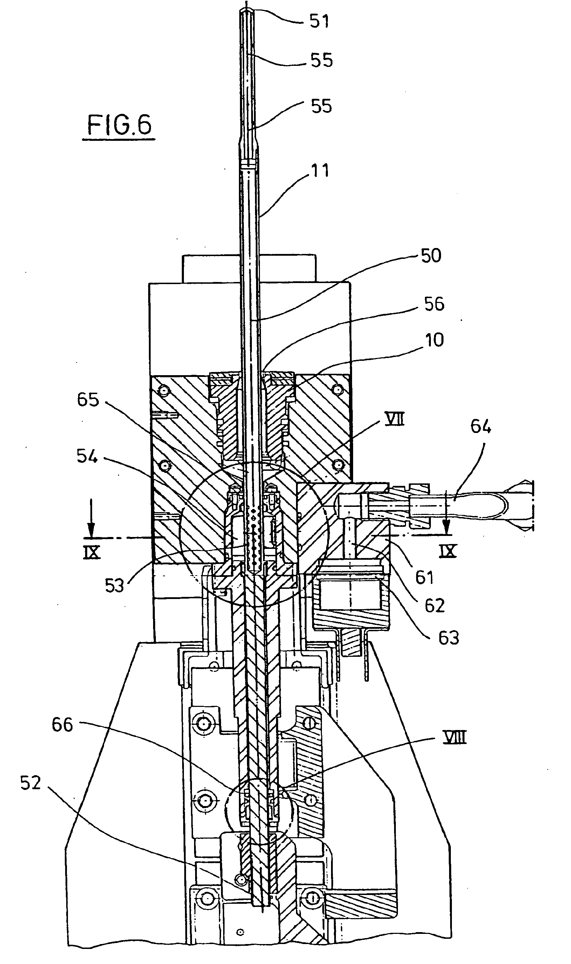

Fig. 6 veranschaulicht, daß die Reckstange (11) mit einem Stangeninnenraum (50) versehen ist, in den Durchgangsöffnungen (53) einmünden, die in einem zwischen einer Reckstangenkuppe (51) und einem der Reckstangenkuppe (51) abgewandt angeordneten Reckstangenende (52) positioniert sind. Bei der in Fig. 6 veranschaulichten Positionierung der Reckstange (10) stellen die Durchgangsöffnungen (53) eine Verbindung zwischen dem Stangeninnenraum (50) und einer Druckkammer (54) her.

Im Bereich eines der Reckstangenkuppe (51) zugewandten Bereiches der Reckstange (11) sind Ausströmöffnungen (55) positioniert. Bei dem in Fig. 6 dargestellten Ausführungsbeispiel erstreckt sich im Bereich des Anschlußkolbens (10) um die Reckstange (11) herum ein Ringspalt (56), so daß bei dieser Ausführungsform eine Druckgaszuführung sowohl durch den Stangeninnenraum (50) als auch durch den Ringspalt (56) hindurch erfolgen kann.

Im Bereich eines Ventilblockes (61) ist ein Zufuhrkanal angeordnet, der ein Steuerventil (63) mit einer Gaszuführung (64) verbindet. Über das Steuerventil (63) wird die Gaszufuhr zur Druckkammer (54) gesteuert.

Eine Abdichtung der Reckstange (11) hinsichtlich einer Umgebung erfolgt über Stangendichtungen (65, 66). Innerhalb des von den Stangendichtungen (65, 66) begrenzten Druckraumes ist eine abgedichtete Führung des mit den Durchgangsöffnungen (53) versehenen Bereiches der Reckstange (11) möglich.

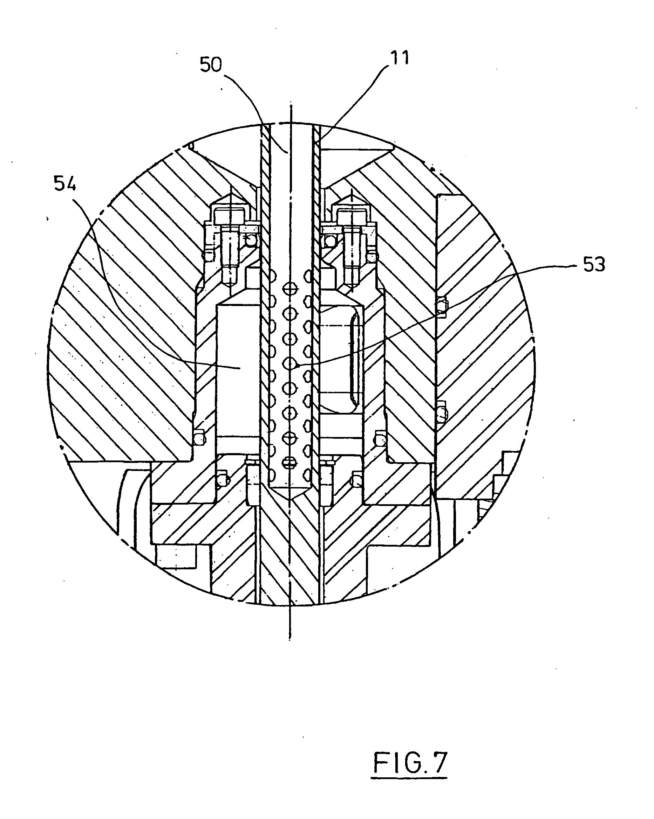

Aus Fig. 7 ist der Aufbau der Reckstange (11) im Bereich der Durchgangsöffnungen (53) sowie die konstruktive Gestaltung der Druckkammer (54) in einer vergrößerten Darstellung zu erkennen. Die Durchgangsöffnungen (53) sind beim dargestellten Ausführungsbeispiel in Richtung einer Längsachse (57) der Reckstange (11) reihenartig hintereinander angeordnet. Mehrere derartige Reihen sind entlang des Umfanges der Reckstange (11) relativ zueinander mit einem Abstand angeordnet. Insbesondere ist daran gedacht, die gebildeten Reihen in Richtung der Längsachse (57) derart relativ zueinender versetzt anzuordnen, daß ein Versatz um die Hälfte eines Mittellinienabstandes der Durchgangsöffnungen (53) vorliegt. Hierdurch werden die Durchgangsöffnungen (53) einer Reihe von Durchgangsöffnungen (53) jeweils im Schwerpunkt von rechteckförmigen Bezugsflächen angeordnet, die von jeweils zwei Durchgangsöffnungen (53) benachbarter Reihen aufgespannt werden. Diese Anordnung unterstützt eine gleichmäßige Strömung.

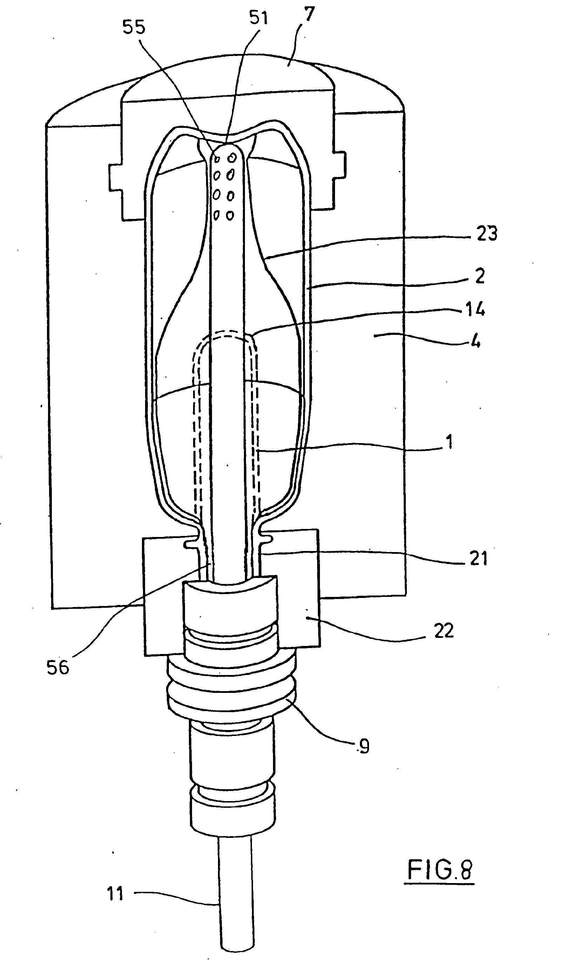

Fig. 8 veranschaulicht nochmals die Anordnung der Ausströmöffnungen (55) der Reckstange (11) in einem der Reckstangenkuppe (51) zugewandten Bereich der Reckstange (11) sowie die Anordnung des Ringspaltes (56) im Bereich des Mündungsabschnittes (21). Durch diese Anordnung ist es insbesondere möglich, zu Beginn des Blasformungsvorganges durch den Ringspalt (56) Druckluft in den Vorformling (1) bzw. die sich entwickelnde Behälterblase (23) einzuleiten und anschließend die Druckgaseinleitung durch die Ausströmöffnungen (55) der Reckstange (11) hindurch fortzusetzen. Die Anordnung der Ausströmöffnungen (55) erfolgt vorzugsweise in einem sich an die Reckstangenkuppe (51) anschließenden Bereich der Reckstange (11) mit einer Bereichsausdehnung von etwa 10 cm in Richtung der Längsachse (57). Bevorzugt ist ein Bereich von höchstens 2,5 cm, besonders bevorzugt ein Bereich von höchstens 1 cm. Beispielsweise ist es auch möglich, im Bereich der Reckstangenkuppe (51) einen Kranz von Ausströmöffnungen (55) vorzusehen, deren Längsachse sich schräg geneigt zum Boden des Behälters (2) erstrecken.

Fig. 8 veranschaulicht, daß bei einer typischen Behälterblase (23) diese sich bereits in einem relativ frühen Formungszustand in einer Umgebung des Mündungsabschnittes (21) der Blasform (4) nähert bzw. bereits an der Blasform (4) anliegt. In Abhängigkeit von der Geometrie des jeweils blaszuformenden Behälters (2) kann im Anschluß an die Druckgaszuführung nur über den Ringspalt (56) die weitere Druckgaseinleitung allein über die Ausströmöffnungen (55) der Reckstange (11) erfolgen, es ist aber auch möglich, zumindest zeitweilig das Druckgas sowohl über den Ringspalt (56) als auch über die Ausströmöffnungen (55) zuzuführen. Ebenfalls ist es möglich, die vollständige Zuführung des Druckgases über den Ringspalt (56) vorzunehmen.

Eine Druckgaszuführung gleichzeitig über die Ausströmöffnungen (55) und den Ringspalt (56) ermöglicht aufgrund der Parallelschaltung der Strömungswege eine Druckgaszuführung mit geringerem Strömungswiderstand und somit geringerem Zeitbedarf. Eine Druckgaszuführung im zweiten zeitlichen Abschnitt der Blasverformung allein über die Ausströmöffnung (55) unterstützt eine Kühlung im Bereich des Bodens des Behälters (2), der prozeßbedingt wesentlich dicker als die Seitenwände des Behälters (2) ausgebildet wird und hierdurch stärker gekühlt werden muß, um eine ausreichende Materialstabilität zu erreichen. Eine Zuführung um über den Ringspalt (56) vermeidet unerwünschte Kühleffekte Grundsätzlich ist es somit möglich, zunächst das Druckgas ausschließlich über den ersten Strömungsweg und anschließend über den zweiten Strömungsweg zuzuführen, es ist aber auch möglich, während der zweiten Phase der Blasverformung die Druckgaszuführung über beide Strömungswege vorzunehmen oder zunächst eine Zwischenphase mit gleichzeitiger Druckgaszuführung durch beide Strömungswege und anschließend eine Umformungsphase mit ausschließlicher Druckgaszuführung über den zweiten Strömungsweg durchzuführen.

Gemäß einer bevorzugten Verfahrensvariante wird über den ersten Strömungsweg Druck eines niedrigeren Druckniveaus, beispielsweise mit einem Druck im Bereich von 5 bis 20 bar, und im Bereich des zweiten Strömungsweges Druckgas eines höheren Druckniveaus, beispielsweise mit einem Druck von etwa 40 bar zugeführt. Der niedrigere Druck kann aus dem höheren Druck über einen Druckwandler abgeleitet werden. Prinzipiell ist es auch möglich, die Querschnittgestaltung des ersten Strömungsweges derart zu gestalten, daß auch der erste Strömungsweg an den höheren Druck angeschlossen wird und der bereitgestellte Strömungswiderstand die beabsichtigte Druckreduzierung verursacht .

Eine erfindungsgemäße Verfahrensdurchführung erfolgt gemäß einem Ausführungsbeispiel derart, daß zunächst nach einem Einsetzen des Vorformlings (1) in die Blasstation (3) und nach einem Schließen der Blasform (4) eine axiale Reckung des Vorformlings (1) unter Verwendung der Reckstange (11) durchgeführt wird. Die Reckung kann gegebenenfalls bei gleichzeitiger Beaufschlagung des Vorformlings (1) mit einem ersten Blasdruck erfolgen.

Nach einer Durchführung des Reckvorganges wird der Vorformling (1) mit einem niedrigen Blasdruck aufgeweitet und anschließend mit einem höheren Blasdruck fertig geformt. Der aus dem Vorformling (1) gefertigte Behälter (2) kommt bei diesem Formungsvorgang zur Anlage an der metallischen Blasform (4) und es erfolgt ein Wärmeübergang vom Behälter (2) in die Blasform (4). Hierdurch wird eine Verfestigung des Materials des Behälters (2) hervorgerufen.

Nach dem Erreichen eines maximalen Blasdruckes wird dieser innerhalb des Behälters (2) so lange aufrecht erhalten, bis der Behälter (2) einen ersten Verfestigungszustand erreicht hat. In diesem ersten Verfestigungszustand ist es zwar noch nicht möglich, den Behälter (2) aus der Blasform (4) zu entnehmen, bei einer Druckabsenkung erfolgt jedoch zumindest kein Rückschrumpfen des Behälters in einem nicht tolerierbaren Ausmaß.

Mit Beginn dieser Druckabsenkung bzw. mit einer vorgebbaren Verzögerungszeit nach dem Beginn der Druckabsenkung wird aus der Reckstange heraus ein kühlendes Gas in Richtung auf den Boden des geblasenen Behälters (2) geleitet. Die Reckstange (11) kann hierbei entweder in Kontakt mit dem Boden des geblasenen Behälters (2) sein, es ist aber auch möglich, die Reckstange zumindest teilweise bereits wieder aus der Blasform (4) herauszuziehen.

Durch die aktive Kühlung des Bodenbereiches des Behälters (2) wird dieser soweit verfestigt, daß relativ schnell eine Entnahme des Behälters (2) aus der Blasform (4) ermöglicht wird. Es wird hierbei berücksichtigt, daß sich im Bereich des Bodens des Behälters (2) eine vergleichsweise große Materialansammlung befindet, die eine längere Abkühlungszeit erforderlich macht, als das Material im Seitenwandbereich des Behälters (2) benötigt.

Hinsichtlich der Bereitstellung des aus der Reckstange (11) herausströmenden kühlenden Gases können mehrere Ausführungsvarianten realisiert werden. Gemäß einer ersten Variante ist die Reckstange (11) an eine Kühlgasversorgung angeschlossen und das kühlende Gas wird durch die Reckstange (11) hindurch geleitet.

Gemäß einer einfachsten Variante ist die Reckstange (11) lediglich mit einem Hohlraum versehen, der bei einer Durchführung des Blasvorganges aus dem Innenraum des Behälters (2) heraus aus mit Gas gefüllt wird und bei dem als Folge einer Druckabsenkung innerhalb des Behälters (2) das Gas wieder aus der Reckstange (11) herausströmt.

Gemäß einer dritten Ausführungsform ist der Innenraum der Reckstange (11) an ein Speichervolumen angeschlossen, das die Menge des verfügbaren Kühlgases vergrößert. Gemäß einer passiven Ausführungsform wird auch dieses Speichervolumen durch die Reckstange (11) hindurch mit Blasgas aus dem Inneren des Behälters (2) bzw. aus dem Inneren der Blasform (4) heraus befüllt. Ebenfalls ist es denkbar, das entsprechende Speichervolumen aus einer externen Kühlgasquelle zu füllen bzw. sowohl eine Füllung über eine externe Gasversorgung als auch eine Füllung aus dem Innenraum der Blasform (4) heraus vorzusehen. Eine geeignete zeitliche Koordinierung kann hierbei über aktiv gesteuerte Ventile oder in einer einfachen Ausführungsform durch geeignet angeordnete Rückströmventile unterstützt werden.

Eine besonders hohe Verfahrenseffektivität wird dann erreicht, wenn die Temperatur der Blasform (4) maximal 75°C oder 60°C beträgt. Insbesondere erweist es sich als vorteilhaft, wenn die Formtemperatur maximal 40°C beträgt. Hierdurch überlagern sich die Kühleffekte durch eine Anlage des Behälters (2) an der Blasform (4) und die Kühlung durch das aus der Reckstange (11) herausströmenden Kühlgas.

Einen wesentlichen Einfluß auf die Wirksamkeit des Kühleffektes hat eine Positionierung der Reckstange während der Durchführung der Druckentspannung in der ausgefahrenen Reckposition oder zumindest in der Nähe dieser Position. Eine Steuerung des Vorganges kann dadurch erleichtert werden, wenn die Reckstange bis zum Abschluß des Kühlvorganges am Boden des geblasenen Behälters anliegt. Grundsätzlich ist es aber auch möglich, die Reckstange vor oder während der Durchführung des Kühlvorganges geringfügig zurückzuziehen.

Unabhängig davon, ob das Blasgas der Kavität der Blasstation teilweise oder vollständig über den Innenraum der Reckstange hindurch oder teilweise oder vollständig über einen die Reckstange umgebenden Ringspalt oder andersartige Zuführkanäle hindurch zugeführt wird, erfolgt in einem ersten Schritt zumindest auch ein Befüllen des Innenraums der Reckstange mit Blasgas.

## Patentansprüche

1. verfahren zur Blasformung von Behältern (2), bei dem ein Vorformling (1) nach einer thermischen Konditionierung innerhalb einer Blasform (4) von einer Reckstange (11) gereckt und durch Blasdruckeinwirkung in den Behälter (2) umgeformt wird und bei dem unter Druck stehendes Gas in den Behälter (2) eingeleitet wird, **dadurch gekennzeichnet, daß** nach dem Erreichen eines maximalen Blasdruckes in der Blasform (4) und zu einem Beginn einer Druckabsenkung bzw. mit einer vorgebbaren Verzögerungszeit nach dem Beginn der Druckabsenkung aus der Reckstange (11) heraus ein kühlendes Gas in Richtung auf einen Boden des geblasenen Behälters (2) geleitet wird.

2. verfahren nach Anspruch 1, **dadurch gekennzeichnet, daß** das kühlende Gas der Reckstange (11) von einer Druckgasversorgung zugeführt wird.

3. Verfahren nach Anspruch 1 oder 2, **dadurch gekennzeiChnet, daß** das kühlende Gas der Reckstange (11) von einer Blasgas-Hochdruckversorgung zugeführt wird.

4. Verfahren nach Anspruch 1, **dadurch gekennzeichnet, daß** das kühlende Gas aus einem Speicherraum der Reckstange (11) herausströmt.

5. Verfahren nach Anspruch 4, **dadurch gekennzeichnet, daß** der speicherraum der Reckstange (11) durch Blasgas aus einem Innenraum der Blasform (4) heraus befüllt wird.

6. Verfahren nach einem der Ansprüche 1 bis 5, **dadurch gekennzeichnet, daß** ein Innenraum der Reckstange (11) mit einem Zusatzspeicher für kühlendes Gas gekoppelt ist.

7. Verfahren nach Anspruch 6, **dadurch gekennzeichnet, daß** der Zusatzspeicher und der Innenraum der Reckstange (11) im wesentlichen in einer Längsrichtung hintereinander positioniert werden.

8. Verfahren nach Anspruch 6, **dadurch gekennzeichnet, daß** der Zusatzspeicher mindestens bereichsweise den Innenraum der Reckstange (11) umgebend positioniert wird.

9. Verfahren nach einem der Ansprüche 1 bis 8, **dadurch gekennzeichnet, daß** der Behälter (2) in einer Blasform (4) mit einer Blasformtemperatur von höchstens 75°C geformt wird.

10. verfahren nach einem der Ansprüche 1 bis 8, **dadurch gekennzeichnet, daß** der Behälter (2) in einer Blasform (4) mit einer Blasformtemperatur von höchstens 40°C geformt wird.

11. Verfahren nach einem der Ansprüche 1 bis 10, **dadurch gekennzeichnet, daß** mindestens ein Teil des aus der Reckstange (11) herausströmenden Kühlgases in einem vorhergehenden Prozeßschritt als Blasgas in die Blasform (4) eingeleitet wurde.

12. verfahren nach einem der Ansprüche 1 bis 11, **dadurch** gekenntzeichnet, daß der Stangeninnenraum (50) in einem ersten Prozeßschritt aus dem Inneraum der Blasform (4) heraus befüllt wird, daß anschließend während eines Druckaufbaues innerhalb der Blasform (4) die im Stangen innenraum (50) bevorratete Blasluft mindestens teilweise durch aus einer Blasgasversorgung in den Innenraum (50) geleitete Blasluft wieder in den Innenraum der Blasform (4) zurücktransferiert wird und daß nach der Blasdruckabsenkung eine weitere Blasgasmenge aus dem stangeninnenraum in den Innenraum der Blasform (4) übergeleitet wird.

13. Vorrichtung zur Blasformung von Behältern (2), die mindestens eine Blasstation (3) mit einer Blasform (4) sowie mindestens einer Reckstange (11) aufweist, sowie bei der die Blasstation (3) an eine Versorgungseinrichtung zur Zufuhr von unter Druck stehendem Gas angeschlossen ist und bei der die Reckstange (11) mindestens bereichsweise hohl ausgebildet ist, **dadurch gekennzeichnet, daß** ein von der Reckstange (11) bereitgestellter Stangeninnenraum (50) als Zwischenspeicher ausgebildet ist, der aus dem Innenraum der Blasform (4) heraus und in den Stangeninnenraum (50) hinein strömendes Blasgas aufnimmt und nach einer Blasdruckabsenkung aus dem Stangeninnenraum (50) heraus in den Innenraum der Blasform (4) überleitet.

14. Vorrichtung nach Anspruch 13, **dadurch gekennzeichnet, daß** der Stangeninnenraum (50) mit einer Druckgasversorgung gekoppelt ist.

15. Vorrichtung nach Anspruch 13 oder 14, **dadurch gekennzeichnet, daß** der Stangeninnenraum (50) mit einer Blasgas-Hochdruckversorgung gekoppelt ist.

16. Vorrichtung nach einem der Ansprüche 13 bis 15, **dadurch gekennzeichnet, daß** der Stangeninnenraum (50) über mindestens eine Ausströmöffnung (55) mit einem Innenraum der Blasform (4) verbunden ist.

17. Vorrichtung nach einem der Ansprüche 13 bis 16, **dadurch gekennzeichnet, daß** der Stangeninnenraum (50) mit einem Zusatzspeicher für Kühlgas verbunden ist.

18. Vorrichtung nach Anspruch 17, **dadurch gekennzeichnet, daß** der zusatzspeicher in einer Längsrichtung der Reckstange (11) hinter dem Stangeninnenraum (50) angeordnet ist.

19. Vorrichtung nach Anspruch 17, **dadurch gekennzeichnet, daß** der Zusatzspeicher die Reckstange (11) mindestens bereichsweise umgibt.

20. Vorrichtung nach einem der Ansprüche 13 bis 19, **dadurch gekennzeichnet, daß** hinsichtlich einer Strömungsrichtung des Blasgases der Innenraum der Blasform (4) und der Stangeninnenraum (50) derart hintereinander angeordnet sind, daß der Innenraum der Blasform (4) in Strömungsrichtung des Blasgases zwischen einer Blasgasversorgung und dem Stangeninnenraum (50) angeordnet ist.

21. Vorrichtung nach einem der Ansprüche 13 bis 20, **dadurch gekennzeichnet, daß** der Stangeninnenraum (50) als Zwischenspeicher für aus einem Innenraum der Blasform (4) in den Stangeninnenraum (50) strömendes und nach einer Blasdruckabsenkung aus dem Stangeninnenraum (50) wieder in den Innenraum der Blasform (4) zurückströmendes Blasgas ausgebildet ist.

## Claims

1. A process for blow-moulding containers (2), in which a preform (1) is stretched by a stretching bar (11) following thermal conditioning within a blowing mould (4) and formed into the container (2) by the effect of blowing pressure and in which pressurised gas is introduced into the container (2), **characterised in that**, after reaching a maximum blowing pressure in the blowing mould (4) and at the start of a drop in pressure or at a predeterminable delay time after the start of the drop in pressure, a cooling gas is conducted out of the stretching bar (11) towards the base of the blown container (2).

2. A process according to Claim 1, **characterised in that** the cooling gas is supplied to the stretching bar (11) by a compressed gas supply.

3. A process according to Claim 1 or 2, **characterised in that** the cooling gas is supplied to the stretching bar (11) by a high-pressure blowing gas supply.

4. A process according to Claim 1, **characterised in that** the cooling gas flows out of a storage space of the stretching bar (11).

5. A process according to Claim 4, **characterised in that** the storage space of the stretching bar (11) is filled with blowing gas from an interior space of the blowing mould (4).

6. A process according to one of Claims 1 to 5, **characterised in that** an interior space of the stretching bar (11) is coupled to an auxiliary store for cooling gas.

7. A process according to Claim 6, **characterised in that** the auxiliary store and the interior space of the stretching bar (11) are positioned substantially in succession in a longitudinal direction.

8. A process according to Claim 6, **characterised in that** the auxiliary store is positioned surrounding the interior space of the stretching bar (11), at least in parts.

9. A process according to one of Claims 1 to 8, **characterised in that** the container (2) is formed in a blowing mould (4) with a blowing-mould temperature of a maximum of 75°C.

10. A process according to one of Claims 1 to 8, **characterised in that** the container (2) is formed in a blowing mould (4) with a blowing-mould temperature of a maximum of 40°C.

11. A process according to one of Claims 1 to 10, **characterised in that** at least some of the cooling gas flowing out of the stretching bar (11) was introduced into the blowing mould (4) as blowing gas in a preceding process step.

12. A process according to one of Claims 1 to 11, **characterised in that** the interior space (50) of the bar is filled from the interior space of the blowing mould (4) in a first process step, **in that**, during a rise in pressure within the blowing mould (4), at least some of the blowing air supplied in the interior space (50) of the bar is then transferred back into the interior space of the blowing mould (4) by means of blowing air conducted out of a blowing-gas supply into the interior space (50), and **in that**, after the drop in blowing pressure, a further quantity of blowing gas is transferred from the interior space of the bar into the interior space of the blowing mould (4).

13. A device for blow-moulding containers (2), which has at least one blowing station (3) with a blowing mould (4) and at least one stretching bar (11), and in which the blowing station (3) is connected to a supply device for supplying pressurised gas, and in which the stretching bar (11) is of a hollow construction, at least in parts, **characterised in that** an interior bar space (50) which is provided by the stretching bar (11) is constructed as an intermediate store which receives blowing gas flowing out of the interior space of the blowing mould (4) and into the interior space (50) of the bar and, after a drop in blowing pressure, is transferred from the interior space (50) of the bar into the interior space of the blowing mould (4).

14. A device according to Claim 13, **characterised in that** the interior space (50) of the bar is coupled to a compressed gas supply.

15. A device according to Claim 13 or 14, **characterised in that** the interior space (50) of the bar is coupled to a high-pressure blowing gas supply.

16. A device according to one of Claims 13 to 15, **characterised in that** the interior space (50) of the bar is connected to an interior space of the blowing mould (4) by way of at least one discharge opening (55).

17. A device according to one of Claims 13 to 16, **characterised in that** the interior space (50) of the bar is connected to an auxiliary store for cooling gas.

18. A device according to Claim 17, **characterised in that** the auxiliary store is arranged behind the interior space (50) of the bar as seen in a longitudinal direction of the stretching bar (11).

19. A device according to Claim 17, **characterised in that** the auxiliary store surrounds the stretching bar (11), at least in parts.

20. A device according to one of Claims 13 to 19, **characterised in that**, with regard to a flow direction of the blowing gas, the interior space of the blowing mould (4) and the interior space (50) of the bar are arranged in succession in such a way that the interior space of the blowing mould (4) is arranged between a blowing-gas supply and the interior space (50) of the bar as seen in the direction of flow of the blowing gas.

21. A device according to one of Claims 13 to 20, **characterised in that** the interior space (50) of the bar is constructed as an intermediate store for blowing gas flowing out of an interior space of the blowing mould (4) into the interior space (50) of the bar and, after a drop in blowing pressure, out of the interior space (50) of the bar back into the interior space of the blowing mould (4).

## Revendications

1. Procédé pour le formage par soufflage de récipients (2), dans lequel une préforme (1), après un conditionnement thermique à l'intérieur d'un moule de soufflage (4), est étirée au moyen d'une barre d'étirage (11) et transformée en un récipient (2) sous l'effet d'une pression de soufflage, et dans lequel un gaz comprimé est introduit dans le récipient (2), **caractérisé en ce que**, après l'obtention de la pression de soufflage maximale dans le moule de soufflage (4) et lors du début d'une baisse de pression, respectivement après le début de la baisse de pression avec un retard pouvant être prédéterminé, un gaz de refroidissement, en provenance de la barre d'étirage (11), est conduit en direction du fond du récipient (2) soufflé.

2. Procédé selon la revendication 1, **caractérisé en ce que** le gaz de refroidissement de la barre d'étirage (11) est amené par un système d'alimentation en gaz comprimé.

3. Procédé selon revendication 1 ou 2, **caractérisé en ce que** le gaz de refroidissement de la barre d'étirage (11) est amené par un système haute pression d'alimentation en gaz de soufflage.

4. Procédé selon la revendication 1, **caractérisé en ce que** le gaz de refroidissement s'écoule à partir d'une chambre d'accumulation de la barre d'étirage (11).

5. Procédé selon la revendication 4, **caractérisé en ce que** la chambre d'accumulation de la barre d'étirage (11) est remplie de gaz de soufflage en provenance d'un espace intérieur du moule de soufflage (4).

6. Procédé selon l'une des revendications 1 à 5, **caractérisé en ce qu'**un espace intérieur de la barre d'étirage (11) est couplé avec une chambre d'accumulation supplémentaire de gaz de refroidissement.

7. Procédé selon la revendication 6, **caractérisé en ce que** la chambre d'accumulation supplémentaire et l'espace intérieur de la barre d'étirage (11) sont positionnés sensiblement l'un derrière l'autre dans une direction longitudinale.

8. Procédé selon la revendication 6, **caractérisé en ce que** la chambre d'accumulation supplémentaire est positionnée de sorte qu'elle entoure, au moins par sections, l'espace intérieur de la barre d'étirage (11).

9. Procédé selon l'une des revendications 1 à 8, **caractérisé en ce que** le récipient (2) est formé dans un moule de soufflage (4) à une température de 75 °C au maximum.

10. Procédé selon l'une des revendications 1 à 8, **caractérisé en ce que** le récipient (2) est formé dans un moule de soufflage (4) à une température de 40 °C au maximum.

11. Procédé selon l'une des revendications 1 à 10, **caractérisé en ce qu'**au moins une partie du gaz de refroidissement sortant de la barre d'étirage (11) a été introduite dans le moule de soufflage (4), en tant que gaz de soufflage, au cours d'une étape précédente.

12. Procédé selon l'une des revendications 1 à 11, **caractérisé en ce que** l'espace intérieur (50) de la barre est rempli à partir de l'espace intérieur du moule de soufflage (4) au cours d'une première étape, que, pendant une montée de la pression à l'intérieur du moule de soufflage (4), l'air de soufflage, accumulé dans l'espace intérieur (50) de la barre, est ensuite conduit de nouveau, au moins partiellement, dans l'espace intérieur du moule de soufflage (4) par de l'air de soufflage, amené dans l'espace intérieur (50) à partir d'un système d'alimentation en gaz de soufflage, et qu'une autre quantité de gaz de soufflage est transférée dans l'espace intérieur du moule de soufflage (4) à partir de l'espace intérieur de la barre, après la baisse de la pression de soufflage.

13. Dispositif pour le formage par soufflage de récipients (2), qui comprend au moins une station de soufflage (3) avec un moule de soufflage (4), ainsi qu'au moins une barre d'étirage (11), et dans lequel la station de soufflage (3) est raccordée à un système d'alimentation pour l'apport d'un gaz comprimé, et dans lequel la barre d'étirage (11) est de conception creuse, au moins par sections, **caractérisé en ce qu'**un espace intérieur (50) de la barre d'étirage (11) est conçu en tant qu'accumulateur intermédiaire, qui reçoit le gaz de soufflage, qui sort de l'espace intérieur du moule de soufflage (4) et pénètre dans l'espace intérieur (50) de la barre, et le conduit de l'espace intérieur (50) de la barre dans l'espace intérieur du moule (4) dans l'espace intérieur du moule de soufflage (4) après une baisse de la pression de soufflage.

14. Dispositif selon la revendication 13, **caractérisé en ce que** l'espace intérieur (50) de la barre est couplé avec un système d'alimentation en gaz comprimé.

15. Dispositif selon revendications 13 ou 14, **caractérisé en ce que** l'espace intérieur (50) de la barre est couplé avec un système haute pression d'alimentation en gaz de soufflage.

16. Dispositif selon l'une des revendications 13 à 15, **caractérisé en ce que** l'espace intérieur (50) de la barre est relié à un espace intérieur du moule de soufflage (4) par l'intermédiaire d'au moins une ouverture d'écoulement (55).

17. Dispositif selon l'une des revendications 11 à 16, **caractérisé en ce que** l'espace intérieur (50) de la barre est relié à un accumulateur supplémentaire de gaz de refroidissement.

18. Dispositif selon la revendication 17, **caractérisé en ce que** l'accumulateur supplémentaire est disposé derrière l'espace intérieur (50) de la barre, dans une direction longitudinale de la barre d'étirage (11).

19. Dispositif selon la revendication 17, **caractérisé en ce que** l'accumulateur supplémentaire entoure la barre d'étirage (11), au moins par sections.

20. Dispositif selon l'une des revendications 13 à 19, **caractérisé en ce que**, par rapport à une direction d'écoulement du gaz de soufflage, l'espace intérieur du moule de soufflage (4) et l'espace intérieur (50) de la barre sont disposés l'un derrière l'autre de sorte que l'espace intérieur du moule de soufflage (4) soit disposé entre un système d'alimentation en gaz de soufflage et l'espace intérieur (50) de la barre, dans la direction d'écoulement du gaz de soufflage.

21. Dispositif selon l'une des revendications 13 à 20, **caractérisé en ce que** l'espace intérieur (50) de la barre est conçu en tant qu'accumulateur intermédiaire pour le gaz de soufflage, qui s'écoule à partir d'un espace intérieur du moule de soufflage (4) dans l'espace intérieur (50) de la barre, et s'écoule de nouveau, à partir de l'espace intérieur (50) de la barre, dans l'espace intérieur du moule de soufflage (4).
